# FASCICULE DE BREVET EUROPEEN

(11) **EP 1 983 822 B1**
(45) Date de publication et mention de la délivrance du brevet: **26.09.2012**
(21) Numéro de dépôt: 07703380.1
(22) Date de dépôt: 09.02.2007
(51) Int. Cl.: A01K 5/00

(54) **GODET DE DISTRIBUTION DE PRODUIT EN VRAC**
SCHAUFEL ZUR ABGABE VON SCHÜTTGUT
LOADER FOR DISPENSING LOOSE PRODUCT

(30) Priorité: 13.02.2006 FR 0601260
(43) Date de publication de la demande: 29.10.2008
(73) Titulaire: Emily S.A.S., 29800 Treflevenez (FR)
(72) Inventeur: MIOSSEC, Arnaud, F-29440 Plouzevede (FR)
(74) Mandataire: Maillet, Alain
(86) Numéro de dépôt international: PCT/EP2007/001136
(87) Numéro de publication internationale: WO 2007/093329

(56) Documents cités:
- EP-A- 0 855 136
- EP-A1- 0 784 928
- FR-A- 2 848 540
- US-A- 4 467 967

## Description

La présente invention concerne un godet de distribution de produit en vrac.

Un tel godet de distribution est destiné à être attelé à un tracteur agricole, un chargeur, un engin pourvu d'un bras télescopique, pour transporter et distribuer en particulier de la nourriture aux animaux.

Un godet de distribution, comme il est connu de EP 0784928A par exemple, comprend généralement une benne qui incorpore dans son fond une vis sans fin susceptible d'être entraînée à rotation par un moteur. La benne est constituée d'une enveloppe, de section transversale en forme de V, ouverte sur une de ses faces. L'enveloppe comprend ainsi deux parois principales frontale et dorsale réunies, d'une part, par une paroi de fond et latéralement par deux parois latérales.

Une ouverture, pourvue d'une trappe de fermeture/dégagement, est réalisée dans au moins l'une des parois latérales de la benne de manière à ce que la mise en fonctionnement de la vis sans fin puisse faire sortir au travers de ladite ouverture, le produit en vrac contenu dans la benne dans la position de dégagement de ladite trappe.

Compte tenu de la section transversale en forme de V de la benne et du tassement du produit que génère cette géométrie pendant le stockage ou le transport, il arrive parfois que, certains produits, tels que du maïs et de l'herbe ensilée, s'agglomèrent à l'intérieur de la benne et adhèrent aux parois de l'enveloppe de la benne.

Dans ces conditions, le travail de la vis sans fin finit par creuser pendant son fonctionnement un tunnel dans le produit.

Ce produit gratté par la vis sans fin est évacué normalement au travers de l'ouverture, puis, compte tenu de l'agglomération du produit stocké dans la benne, celui finit par former une voûte au niveau de la partie supérieure de la vis sans fin, que celle-ci ne parvient pas à rompre, si bien que la distribution du produit devient aléatoire ou est réalisée par à-coups. Le dosage du produit distribué est difficile à contrôler. Dans certains cas, la distribution ne peut pas être réalisée sans une intervention humaine, consistant en un débourrage de la benne.

Une solution connue pour tenter de palier cet inconvénient consiste à installer dans la benne, un dispositif de défragmentation destiné à défragmenter le produit au voisinage de la vis sans fin pendant la distribution du produit.

De tels dispositifs de défragmentation sont constitués par exemple, d'une seconde vis de démêlage disposée au-dessus de la première et entraînée en sens inverse, d'un axe pourvu de picots disposé au-dessus de la vis sans fin et entraîné en rotation, d'un disque disposé de manière libre à rotation contre une paroi principale de la benne et qui est pourvu à sa périphérie de dents entraînées par le filet hélicoïdale de la vis sans fin et qui agissent comme un peigne.

Ces différents dispositifs ne donnent malheureusement pas toujours satisfaction. En ce qui concerne le disque pourvu de dents, son fonctionnement engendre une usure rapide du filet hélicoïdale de la vis sans fin.

Aussi, le but de l'invention est donc de proposer un godet de distribution qui puisse distribuer de façon continue et régulière des produits considérés comme difficiles à déverser.

A cet effet, est proposé un godet de distribution de produit en vrac, du type constitué d'une benne comprenant deux parois principales frontale et dorsale dont les sections transversales présentent une forme en V, un moyen d'extraction disposé au niveau de l'intersection des deux parois. Selon l'invention, le godet de distribution est pourvu d'un dispositif prévu pour décompacter son contenu, le dispositif comprenant une plaque de décollement montée de manière oscillante le long d'une paroi principale sous l'effet d'un moyen d'entraînement.

Lors de son mouvement, la plaque de décollement se déplace parallèlement à faible distance de la paroi principale et parvient à décoller le produit de ladite paroi principale si bien qu'il s'effondre sous l'effet de sa masse dans le fond du godet où il peut alors être facilement extrait par le moyen d'extraction.

La plaque de décollement est de préférence montée contre la paroi dorsale de la benne.

Selon une caractéristique additionnelle de l'invention, le dispositif pour décompacter comprend une roue d'entraînement interposée entre la paroi principale et la plaque de décollement en étant reliée, d'une part, au moyen d'entraînement et d'autre part, à ladite plaque par l'intermédiaire d'une première articulation, ladite plaque étant pourvue d'une rainure oblongue apte à coulisser autour d'une seconde articulation fixée sur la paroi principale.

La plaque de décollement est ainsi mue de manière cyclique suivant un mouvement combiné d'une rotation autour de l'articulation mobile et d'un coulissement autour de l'articulation fixe.

Selon une caractéristique additionnelle de l'invention, la rainure oblongue est de type rectiligne.

Selon une caractéristique additionnelle de l'invention, la rainure oblongue est de forme incurvée.

Selon une caractéristique additionnelle de l'invention, l'axe de la rainure oblongue de la plaque de décollement est sécant avec l'axe de la première articulation.

Selon une caractéristique additionnelle de l'invention, la plaque de décollement présente une forme triangulaire allongée dont la pointe la plus fermée est fixée par la première articulation sur la roue d'entraînement.

Selon une caractéristique additionnelle de l'invention, la plaque de décollement est pourvue de tasseaux aptes à disloquer la structure agglomérée du produit.

Selon une caractéristique additionnelle de l'invention, les tasseaux de la plaque de décollement sont disposés perpendiculairement à l'axe de la rainure oblongue de la plaque de décollement.

Selon une caractéristique additionnelle de l'invention, les tasseaux sont montés de manière amovible. On peut ainsi les remplacer par d'autres adaptés à un usage spécifique ou les remplacer lorsqu'ils sont usés.

Selon une caractéristique additionnelle de l'invention, le moyen d'entraînement comprend un moto-réducteur fixé à l'arrière de la paroi principale et dont l'axe traverse ladite paroi principale de manière à pouvoir entraîner en rotation la roue d'entraînement.

Avantageusement, le moto-réducteur est de type dont le sens de rotation peut être inversé.

Selon une caractéristique additionnelle de l'invention, le sens de rotation de la roue d'entraînement est tel que le mouvement de la plaque de décollement, dans la position basse de la première articulation est dirigé en direction d'une ouverture de déchargement ouverte dont est pourvue le godet.

Selon une caractéristique additionnelle de l'invention, la plaque de décollement présente dans un plan transversal médian, une symétrie.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue en perspective d'un godet de distribution pourvu d'un dispositif pour décompacter son contenu pendant sa vidange selon l'invention,
la Fig. 2 représente une vue en perspective d'un godet de distribution dont une trappe de fermeture est placée dans une position de dégagement selon l'invention,
la Fig. 3 représente une vue arrière d'un godet de distribution selon l'invention,
la Fig. 4 représente une vue latérale en coupe d'un godet de distribution selon l'invention et,
les Fig. 5a, 5b, 5c représentent trois vues de dessus d'un godet de distribution dont la plaque de décollement du dispositif pour décompacter son contenu est montrée dans différentes positions selon l'invention.

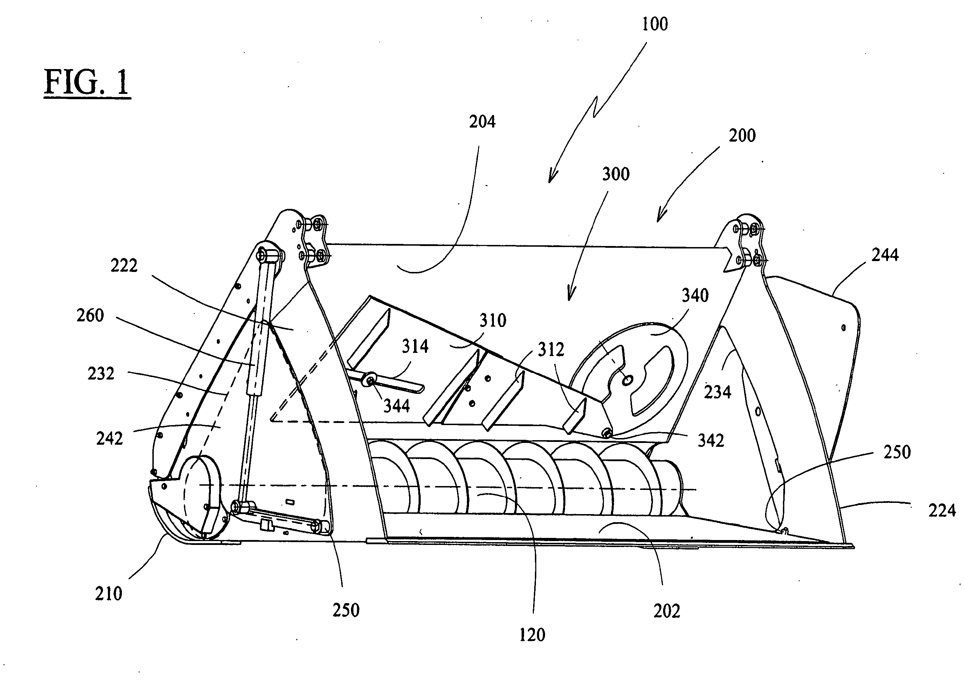

Le godet de distribution 100 représente à la Fig. 1 est destiné à être rempli d'un produit en vrac, à transporter ce produit pour le distribuer ailleurs. Un tel godet de distribution convient en particulier pour apporter de la nourriture à des animaux d'élevage. On peut ainsi transporter et déverser de l'ensilage d'herbe ou de maïs. Seule cette utilisation est décrite ici à titre d'illustration.

Le godet de distribution 100 comprend essentiellement une benne 200 à l'intérieur de laquelle est montée un moyen d'extraction 120 tel qu'une une vis sans fin.

La benne 200 est constituée d'une enveloppe, de section transversale en forme de V, ouverte sur une de ses faces. Elle comprend deux parois principales frontale 202 et dorsale 204 qui sont réunies en partie basse par une paroi de fond 210 et latéralement par deux parois latérales 222, 224.

La vis sans fin 120 est disposée longitudinalement dans la benne 200, au niveau de sa paroi de fond 210.

Au moins une des parois latérales 222 ou 224 est pourvue d'une ouverture de déchargement 232 ou 234. A cette Fig. 1, les deux parois latérales 222 ou 224 sont pourvues respectivement de deux ouvertures de déchargement 232, 234.

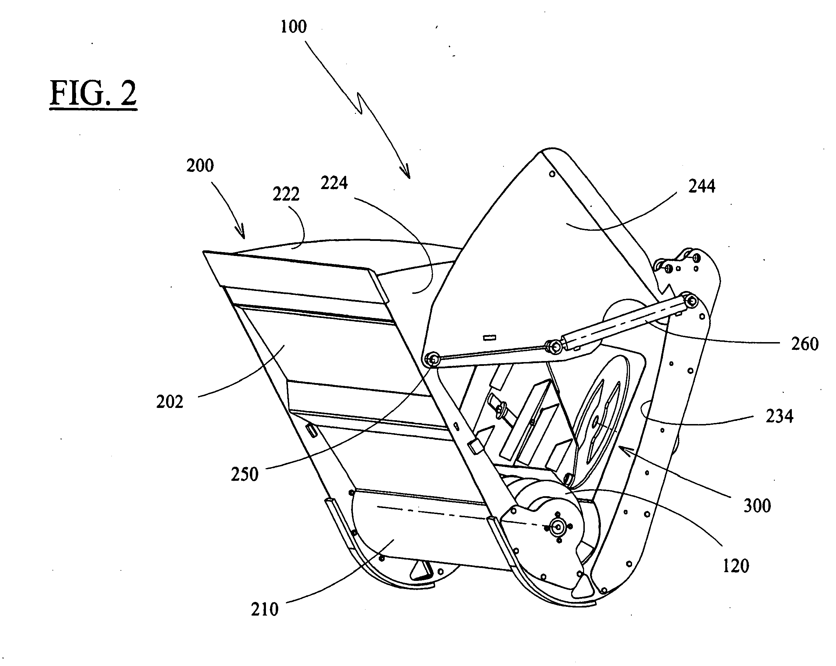

Une trappe de fermeture 242, 244 est disposée à recouvrement sur chaque ouverture de déchargement 232, 234. Cette trappe de fermeture 242, 244 est montée à coulissement, par exemple autour d'une articulation 250, sur la face externe de la paroi latérale 222 ou 224 correspondante, sous l'effet du travail d'un moyen de manoeuvre 260, tel qu'un vérin hydraulique, entre une position de fermeture de l'ouverture correspondante 232, 234, visible sur la partie gauche de cette Fig. 1, et une position de dégagement visible sur la partie droite de cette Fig. 1 ainsi que sur la Fig. 2. Seules une paroi latérale 224, une ouverture de dégagement 234, une trappe de fermeture 244 sont visibles à cette Fig. 2.

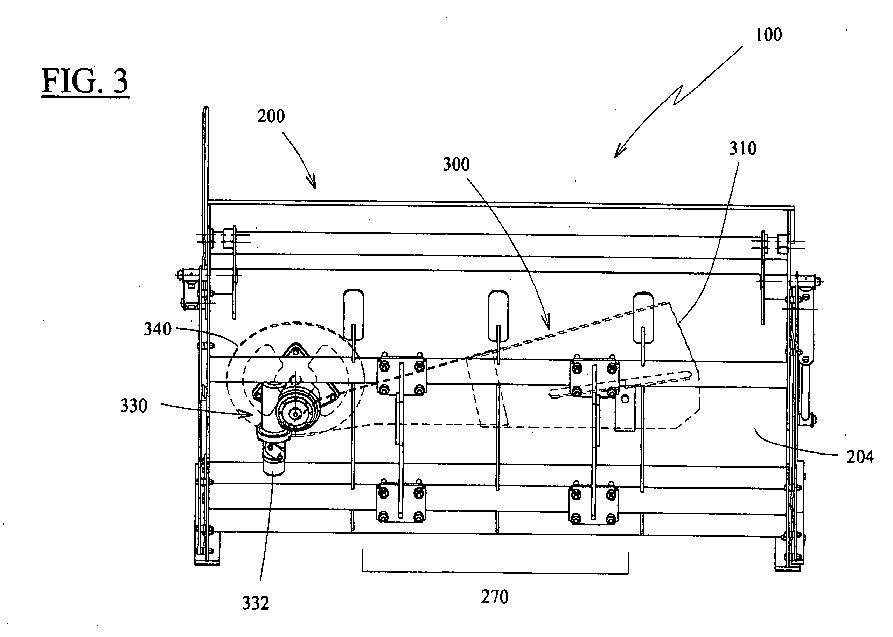

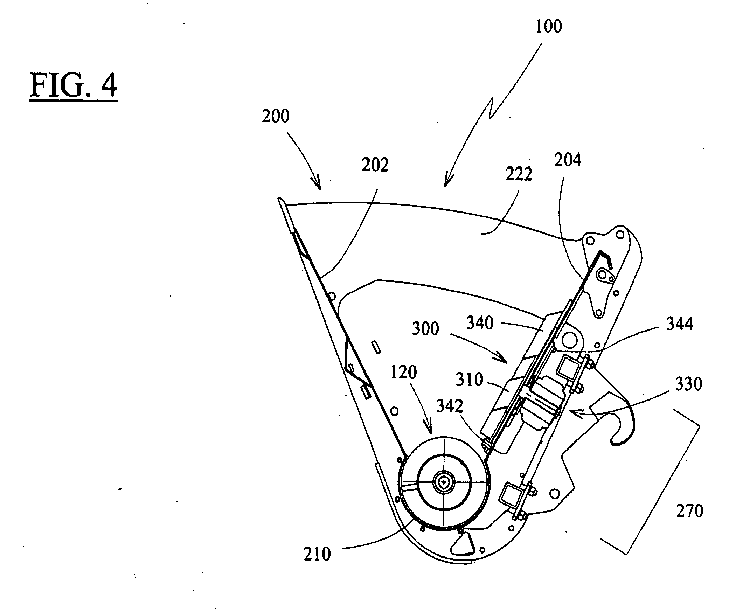

Aux Figs. 3 et 4 uniquement, apparaissent des moyens de fixation 270 du godet de distribution 100 à un engin de manoeuvre, tel qu'un tracteur agricole, un chargeur, un engin pourvu d'un bras télescopique. Ces moyens de fixation 270 sont disposés sur la paroi principale dorsale 204. Ils sont constitués par des sous-ensembles fabriqués en mécano soudure et qui sont fixés par vissage sur ladite paroi.

A la Fig. 1, le godet de distribution 100 est pourvu d'un dispositif 300 pour décompacter son contenu pendant sa vidange. L'utilisation de ce dispositif est particulièrement avantageuse lorsque le produit destiné à être distribué par le godet 100 est de nature à s'agglomérer, à coller contre ses parois. A titre d'illustration un ensilage d'herbe à forte teneur en eau et/ou contenant de longues fibres est considéré comme particulièrement difficile à vidanger.

A cet effet, le dispositif 300 comprend principalement une plaque 310 de décollement montée de manière oscillante, par l'intermédiaire d'un moyen d'entraînement 330, le long d'une paroi principale de la benne 200 et de préférence contre sa paroi dorsale 204 comme cela apparaît à cette Fig. 1.

Lors de son mouvement, la plaque 310 se déplace parallèlement à faible distance de la paroi dorsale 204.

La dimension de la plaque 310 et la portée de son mouvement mis en oeuvre par le moyen d'entraînement 330 sont tels que pendant son déplacement la plaque 310 couvre la plus grande surface possible de la paroi dorsale 204 afin de pouvoir décoller le produit de ladite paroi dorsale si bien que le produit n'adhère plus contre la paroi dorsale 204 et s'effondre sous l'effet de sa masse au fond du godet 100 ce qui permet d'éviter la formation en voûte du produit pendant sa vidange. Il en résulte un débit plus régulier du produit extrait par la vis sans fin ainsi qu'un débit plus important à puissance consommée identiquc.

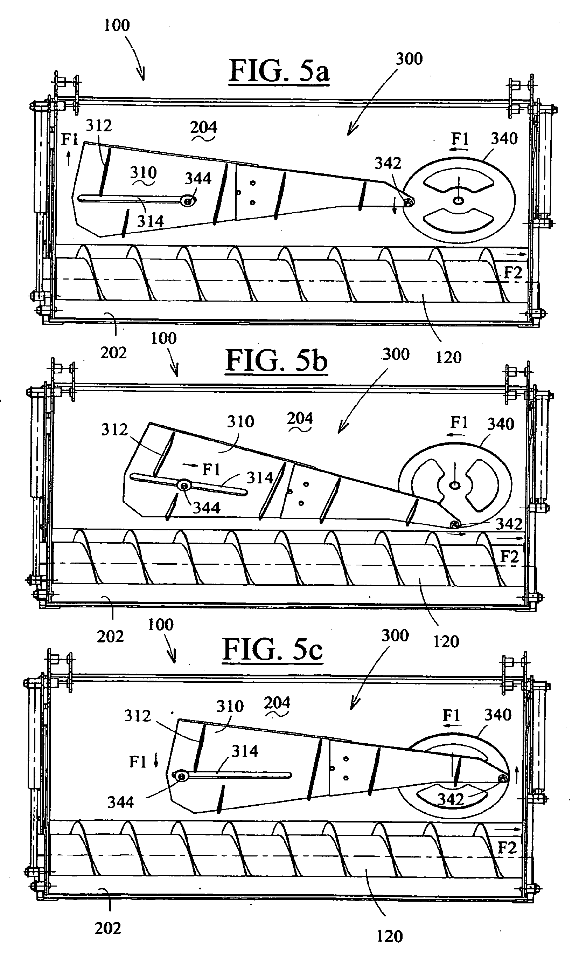

Le moyen d'entraînement 330 comprend à la Fig. 3 un moto-réducteur 332 fixé à l'arrière de la paroi dorsale 204 et dont l'axe traverse ladite paroi dorsale pour entraîner en rotation une roue d'entraînement 340. Aux Figs. 1 et 5, cette roue 340, disposée entre la paroi dorsale 204 et la plaque 310, est reliée, par l'intermédiaire d'une première articulation 342, à la plaque 310. Le mouvement de cette plaque 310 est par ailleurs défini par une seconde articulation 344, fixée sur la paroi dorsale 204, et autour de laquelle peut coulisser la plaque 310. Celle-ci est pourvue à cet effet d'une rainure oblongue 314. Cette rainure oblongue est de type rectiligne. Son axe est sécant avec l'axe de la première articulation 342. Dans une variante de réalisation, non représentée, cette rainure oblongue est de type incurvée, permettant ainsi un mouvement vertical de plus grande amplitude de ladite plaque au niveau de la seconde articulation. On peut ainsi prévoir une plaque dont la largeur est moins importante à cet endroit et qui est cependant susceptible de couvrir la plus grande surface possible de la paroi dorsale.

Aux Figs. 1 et 5, la plaque 310 présente globalement une forme triangulaire allongée dont la base la plus étroite coulisse le long de la seconde articulation et dont la pointe la plus fermée est fixée par la première articulation 342 sur la roue 340.

La plaque 310 peut être constituée d'un élément plein comme cela apparaît à ces Figs. 1 et 5 ou d'un élément perforé de structure plus légère. A ces Figs. 1 et 5, la plaque 310 est constituée d'un assemblage de deux éléments dont l'un repose au niveau de la seconde articulation 344 sur la paroi dorsale 204 et dont l'autre, disposé de manière décalée, repose au niveau de la première articulation 342 sur la roue d'entraînement 340.

La plaque 310 est pourvue de tasseaux 312 aptes à déplacer le produit suivant le mouvement de la plaque afin de disloquer la structure agglomérée du produit lors de son mouvement. A ces Figs. 1 et 5, les tasseaux 312 sont disposés perpendiculairement à l'axe de la rainure oblongue 314.

Les tasseaux 312 sont de préférence montés de manière amovible afin de pouvoir être remplacés pour être adaptés à un usage spécifique ou encore pour être facilement remplacés lorsqu'ils sont usés.

Aux Fig. 5a-5c, le mouvement de la plaque 310 est obtenu autour de l'articulation mobile 342 et de l'articulation fixe 344. La plaque 310 est ainsi mue de manière cyclique suivant un mouvement combiné d'une rotation et d'un coulissement comme le montrent les différentes flèches F1.

Dans la pratique on a constaté qu'une durée de l'ordre de quatre secondes du cycle de la plaque 310 donnait des résultats satisfaisants.

On remarquera que le sens de rotation de la roue 340 est tel que le mouvement de la plaque 310, dans la position basse de la première articulation 342 visible à la Fig. 5b, est dirigé en direction de la sortie du produit matérialisée par la flèche F2, c'est-à-dire en direction de l'ouverture de déchargement qui est ouverte et ici du côté droite des Figs. 5.

Ce mouvement de la plaque 310 contribue ainsi à déstructurer la masse de produit contenu dans la benne du godet de distribution, ce qui facilite son évacuation régulière par la vis sans fin.

Par ailleurs, le moto réducteur est de préférence du type dont le sens de rotation peut être inversé afin de pouvoir inverser le mouvement de la plaque selon le côté du déversement choisi, dans le cas d'une construction du godet de distribution offrant cette possibilité.

Le fonctionnement du godet de distribution est mis en oeuvre de la manière suivante. La benne 200 attelée à un engin puis est remplie d'un produit tel que du maïs ou de l'herbe ensilé. Elle est transportée par l'engin sur le lieu de distribution afin de nourrir des animaux. L'une de trappes 242, 244 est alors ouverte puis la vis sans fin 120 est mise en fonctionnement de manière à distribuer du produit au travers de l'ouverture de déchargement 232, 234. Le moto-réducteur 332 du dispositif pour décompacter 300 est également mis en route si bien que la plaque 310 se déplace le long de la paroi dorsale 204 de la benne 200.

Pendant son mouvement, la plaque 310 évite ainsi la formation de voûte dans le produit pendant sa distribution du fait de sa descente entre les parois frontale 202 et dorsale 204 présentant une section en forme de V. Elle fracture les blocs de matière qui auraient pu se former consécutivement au tassement du produit entre les parois incurvées pendant le transport ou le stockage du produit dans la benne 200.

Le fonctionnement du dispositif pour décompacter 300 est avantageusement mis en oeuvre avec celui de la vis sans fin 120.

Le godet de distribution de l'invention permet de conserver pratiquement le volume utile de la benne.

Il procure un débit plus régulier que dans un godet de l'art antérieur.

A puissance consommée comparable, son débit est plus important que dans un godet de l'art antérieur.

## Revendications

1. Godet (100) de distribution de produit en vrac, du type constitué d'une benne (200) comprenant deux parois principales frontale (202) et dorsale (204) dont les sections transversales présentent une forme en V, un moyen d'extraction (120) disposé au niveau de l'intersection des deux parois (202, 204), **caractérisé en ce qu'**il est pourvu d'un dispositif (300) prévu pour décompacter son contenu, le dispositif (300) comprenant une plaque de décollement (310) montée de manière oscillante le long d'une paroi principale (202, 204) sous l'effet d'un moyen d'entraînement (330).

2. Godet (100) selon la revendication 1, **caractérisé en ce que** le dispositif (300) pour décompacter comprend une roue d'entraînement (340) interposée entre la paroi principale (202, 204) et la plaque de décollement (310) en étant reliée, d'une part, au moyen d'entraînement (330) et d'autre part, à ladite plaque (310) par l'intermédiaire d'une première articulation (342), ladite plaque (310) étant pourvue d'une rainure oblongue (314) apte à coulisser autour d'une seconde articulation (344) fixée sur la paroi principale (202, 204).

3. Godet (100) selon la revendication 2, **caractérisé en ce que** la rainure oblongue (314) est de type rectiligne.

4. Godet (100) selon la revendication 2, **caractérisé en ce que** la rainure oblongue (314) est de forme incurvée.

5. Godet (100) selon la revendication 2, 3 ou 4, **caractérisé en ce que** l'axe de la rainure oblongue (314) est sécant avec l'axe de la première articulation (342).

6. Godet (100) selon l'une quelconque des revendications 2 à 5, **caractérisé en ce que** la plaque de décollement (310) présente une forme triangulaire allongée dont la pointe la plus fermée est fixée par la première articulation (342) sur la roue d'entraînement (340).

7. Godet (100) selon l'une quelconque des revendications précédentes, **caractérisé en ce que** la plaque de décollement (310) est pourvue de tasseaux (312) aptes à disloquer la structure agglomérée du produit.

8. Godet (100) selon la revendication 7, **caractérisé en ce que** les tasseaux (312) de la plaque de décollement (310) sont disposés perpendiculairement à l'axe de la rainure oblongue (314).

9. Godet (100) selon la revendication 7 ou 8, **caractérisé en ce que** les tasseaux (312) sont montés de manière amovible.

10. Godet (100) selon l'une quelconque des revendication 2 à 9, **caractérisé en ce que** le moyen d'entraînement (330) comprend un moto-réducteur (332) fixé à l'arrière de la paroi principale (202, 204) et dont l'axe traverse ladite paroi principale de manière à pouvoir entraîner en rotation la roue d'entraînement (340).

11. Godet (100) selon la revendication 10, **caractérisé en ce que** le moto-réducteur (332) est de type dont le sens de rotation peut être inversé.

12. Godet (100) selon l'une quelconque des revendication 2 à 11, **caractérisé en ce que** le sens de rotation de la roue d'entraînement (340) est tel que le mouvement de la plaque (310), dans la position basse de la première articulation (342) est dirigé en direction d'une ouverture de déchargement (232, 234) ouverte dont est pourvue le godet (100).

## Claims

1. Loader (100) for dispensing loose product, of the type consisting of a hopper (200) having two main walls, the front wall (202) and back wall (204), the cross-section of which forms a V shape, extracting means (120) located at the intersection of the two walls (202, 204), **characterised in that** it is provided with a device (300) intended to loosen its contents, the device (300) comprising a detaching plate (310) mounted along a main wall (202, 204) so as to oscillate under the effect of drive means (330).

2. Loader (100) according to claim 1, **characterised in that** the loosening device (300) comprises a drive wheel (340) interposed between the main wall (202, 204) and the detaching plate (310), being connected on the one hand to the drive means (330) and on the other hand to said plate (310) via a first articulation (342), the said plate (310) being provided with an oblong groove (314) adapted to slide around a second articulation (344) fixed to the main wall (202, 204).

3. Loader (100) according to claim 2, **characterised in that** the oblong groove (314) is of rectilinear configuration.

4. Loader (100) according to claim 2, **characterised in that** the oblong groove (314) is of curved configuration.

5. Loader (100) according to claim 2, 3 or 4, **characterised in that** the axis of the oblong groove (314) is secant with the axis of the first articulation (342).

6. Loader (100) according to any one of claims 2 to 5, **characterised in that** the detaching plate (310) has an elongated triangular shape, the most acute point of which is fixed by the first articulation (342) to the drive wheel (340).

7. Loader (100) according to any one of the preceding claims, **characterised in that** the detaching plate (310) is provided with cleats (312) adapted to dislodge the agglomerated structure of the product.

8. Loader (100) according to claim 7, **characterised in that** the cleats (312) on the detaching plate (310) are arranged perpendicularly to the axis of the oblong groove (314).

9. Loader (100) according to claim 7 or 8, **characterised in that** the cleats (312) are mounted so as to be removable.

10. Loader (100) according to any one of claims 2 to 9, **characterised in that** the drive means (330) comprise a stepping down motor (332) fixed to the back of the main wall (202, 204), the axis of which passes through the said main wall so as to be able to drive the drive wheel (340) in rotation.

11. Loader (100) according to claim 10, **characterised in that** the stepping down motor (332) is of a kind in which the direction of rotation can be reversed.

12. Loader (100) according to any one of claims 2 to 11, **characterised in that** the direction of rotation of the drive wheel (340) is such that the movement of the plate (310) in the bottom position of the first articulation (342) is directed towards an open discharge opening (232, 234) provided on the loader (100).

## Patentansprüche

1. Schaufel (100) zu Verteilung von Schüttgut, von der Art, die aus einem Kübel (200) besteht, der zwei Hauptwände, eine Stirnwand (202) und eine Rückwand (204), enthält, deren Querschnitte eine V-Form haben, wobei eine Entnahmeeinrichtung im Bereich der Schnittlinie der zwei Wände (202, 204) angeordnet ist, **dadurch gekennzeichnet, dass** sie mit einer Vorrichtung (300) versehen ist, die dazu vorgesehen ist, ihren Inhalt zu lockern, wobei die Vorrichtung (300) eine Ablöseplatte (310) enthält, die unter der Wirkung einer Antriebseinrichtung (330) schwingend entlang einer Hauptwand (202, 204) montiert ist.

2. Schaufel (100) nach Anspruch 1, **dadurch gekennzeichnet, dass** die Lockerungsvorrichtung (300) ein Antriebsrad (340) enthält, das zwischen der Hauptwand (202, 204) und der Ablöseplatte (310) eingefügt ist, indem es einerseits mit der Antriebseinrichtung (330) und andererseits mit der Platte (310) über ein erstes Gelenk (342) verbunden ist, wobei die Platte (310) mit einem Längsschlitz (314) versehen ist, der um ein zweites Gelenk (344) gleiten kann, das an der Hauptwand (202, 204) befestigt ist.

3. Schaufel (100) nach Anspruch 2, **dadurch gekennzeichnet, dass** der Längsschlitz (314) vom geradlinigen Typ ist.

4. Schaufel (100) nach Anspruch 2, **dadurch gekennzeichnet, dass** der Längsschlitz (314) gekrümmt ist.

5. Schaufel (100) nach Anspruch 2, 3 oder 4, **dadurch gekennzeichnet, dass** die Achse des Längsschlitzes (314) die Achse des ersten Gelenks (342) schneidet.

6. Schaufel (100) nach einem der Ansprüche 2 bis 5, **dadurch gekennzeichnet, dass** die Ablöseplatte (310) eine längliche Dreiecksform aufweist, deren geschlossenste Spitze durch das erste Gelenk (342) am Antriebsrad (340) befestigt ist.

7. Schaufel (100) nach einem der vorhergehenden Ansprüche, **dadurch gekennzeichnet, dass** die Ablöseplatte (310) mit Leisten (312) versehen ist, die die zusammengeballte Struktur des Produkts auflösen können.

8. Schaufel (100) nach Anspruch 7, **dadurch gekennzeichnet, dass** die Leisten (312) der Ablöseplatte (310) lotrecht zur Achse des Längsschlitzes (314) angeordnet sind.

9. Schaufel (100) nach Anspruch 7 oder 8, **dadurch gekennzeichnet, dass** die Leisten (312) entfernbar montiert sind.

10. Schaufel (100) nach einem der Ansprüche 2 bis 9, **dadurch gekennzeichnet, dass** die Antriebseinrichtung (330) einen Getriebemotor (332) enthält, der an der Rückseite der Hauptwand (202, 204) befestigt ist und dessen Achse die Hauptwand durchquert, um das Antriebsrad (340) in Drehung versetzen zu können.

11. Schaufel (100) nach Anspruch 10, **dadurch gekennzeichnet, dass** der Getriebemotor (332) von der Art ist, dessen Drehrichtung umgekehrt werden kann.

12. Schaufel (100) nach einem der Ansprüche 2 bis 11, **dadurch gekennzeichnet, dass** die Drehrichtung des Antriebsrads (340) so ist, dass die Bewegung der Platte (310) in der tiefen Stellung des ersten Gelenks (342) in Richtung einer offenen Entladeöffnung (232, 234) gelenkt wird, mit der die Schaufel (100) versehen ist.
